# NOUVEAU FASCICULE DE BREVET EUROPEEN

(11) **EP 0 687 706 B2**
(45) Date de publication et mention de la décision concernant l'opposition: **17.03.2004**
(45) Mention de la délivrance du brevet: 01.12.1999
(21) Numéro de dépôt: 95201484.3
(22) Date de dépôt: 06.06.1995
(51) Int. Cl.: C08K 3/34, C08L 23/02

(54) **Composition à base de polyoléfine et procédé de fabrication d'objets façonnés à partir de cette composition**
Polyolefin-Zusammensetzung und Verfahren zur Herstellung von Formteilen mit diesen
Polyolefin composition and process for the production of moulded objects therewith

(30) Priorité: 15.06.1994 BE 9400578
(43) Date de publication de la demande: 20.12.1995
(73) Titulaire: SOLVAY POLYOLEFINS EUROPE - BELGIUM (Société Anonyme), 1050 Bruxelles (BE)
(72) Inventeur: Libert, Daniel, B-1340 Ottignies (BE); Wyart, Alain, B-1080 Bruxelles (BE)
(74) Mandataire: Smith, Julian Philip Howard

(56) Documents cités:
- EP-A- 0 215 444
- EP-A- 0 227 168
- EP-A- 0 348 978
- EP-A- 0 464 782
- WO-A-92/13029
- US-A- 4 795 482
- PATENT ABSTRACTS OF JAPAN vol. 11 no. 262 (C-442) & JP-A-62 062842 (IDEMITSU PETROCHEM KK)
- Product use information, formulating with MILLAD 3988, Lilliken & Co, May 1993

## Description

L'invention concerne une composition à base de polyoléfine comprenant un agent lubrifiant, en particulier une telle composition destinée à la fabrication de capsules pour bouteilles. Elle concerne également un procédé de fabrication d'objets façonnés, en particulier un procédé de fabrication de capsules pour bouteilles à partir de cette composition.

Il est généralement connu de fabriquer des capsules pour bouteilles à partir de polyoléfines et en particulier de polyéthylène. Afin d'optimiser les propriétés de glissance et de faciliter ainsi le dévissage de la capsule, il est également connu d'incorporer, dans la polyoléfine, un agent lubrifiant. Dans le brevet US-A-3330796 on a déjà proposé d'améliorer les propriétés de friction de films à base de polyoléfines, et en particulier de polyéthylène, en y incorporant de l'amide docosénoïque.

Cette composition connue présente l'inconvénient, lorsqu'elle est utilisée comme matière première dans la fabrication de capsules pour bouteilles de produits alimentaires, de conférer aux produits emballés des propriétés organoleptiques (odeur et goût) impropres à la consommation.

L'invention remédie à cet inconvénient en fournissant une composition nouvelle à base de polyoléfine comprenant un agent lubrifiant, qui, lorsqu'elle est utilisée dans la fabrication de capsules pour bouteilles de produits alimentaires, ne confère pas de mauvais goût ni de mauvaise odeur au produit alimentaire emballé.

A cet effet, l'invention concerne une composition à base de polyoléfine comprenant, pour 100 parties en poids de polyoléfine, de 0,1 à 5 parties en poids d'agent lubrifiant choisi parmi les esters de glycérol, les amides d'acides gras saturés ou insaturés contenant de 12 à 35 atomes de carbone et leurs mélanges, et de 0,05 à 2 parties en poids de zéolite, cette zéolite étant un aluminosilicate cristallin présentant une capacité d'adsorption d'eau, à 25 °C et à une pression partielle de vapeur d'eau de 613,3 Pa (4,6 torr), ne dépassant pas 10 % de son poids et présentant un rapport molaire Si/Al, dans le réseau cristallin, au moins égal à 35.

Par zéolite, on entend désigner aux fins de la présente invention, une ou plusieurs zéolites répondant aux spécifications définies ci-dessus. De même, par polyoléfine et par agent lubrifiant, on entend désigner respectivement une ou plusieurs polyoléfines et un ou plusieurs agents lubrifiants.

Une des propriétés essentielles de la zéolite de la composition selon l'invention est son caractère hydrophobe mesuré par sa capacité d'adsorption d'eau à 25 °C sous une pression partielle de vapeur d'eau de 613,3 Pa (4,6 torr). De préférence, cette capacité d'adsorption est inférieure à 6 % en poids. Une telle faible teneur en eau peut être obtenue en éliminant l'eau d'hydratation par tout moyen connu adéquat permettant d'éliminer toute substance bouchant les pores de la zéolite, tel que par exemple une calcination ou des lavages.

La zéolite de la composition selon l'invention présente un rapport molaire Si/Al, dans le réseau cristallin, d'au moins égal à 35. En général, le rapport ne dépasse pas 5000. Il est de préférence de 200 à 500.

La zéolite de la composition selon l'invention présente avantageusement un diamètre moyen des pores d'au moins 5,5 Å, en particulier d'au moins 6,2 Å. En général, le diamètre moyen ne dépasse pas 20 Å, de préférence pas 15 Å.

Dans la plupart des cas, la zéolite de la composition selon l'invention répond à la formule générale

xM_{2/n}O.Al₂O₃.ySiO₂.zH₂O.

dans laquelle M représente un élément des groupes IA et IIA du tableau périodique, n représente la valence de M, x, y et z représentent des nombres supérieurs à 0, y étant au moins égal à 70 et z étant tel que la teneur en eau de la zéolite ne dépasse pas 10 % de son poids. On peut citer à titre d'exemplés typiques de l'élément M, le sodium, le potassium, le magnésium et le calcium. M est le plus souvent du sodium ou du calcium. Les zéolites particulièrement préférées contiennent au plus 2,4 % en poids d'oxyde d'aluminium et au plus 5 % en poids d'oxyde de sodium.

Il peut également s'agir de zéolites contenant simultanément plusieurs oxydes M_{2/n}O d'éléments M différents.

Généralement, la zéolite de la composition selon l'invention se présente sous forme de particules de diamètre moyen d'au plus 10 µm, de préférence d'au plus 8 µm. Le diamètre moyen est habituellement d'au moins 0,1 µm, en particulier d'au moins 1 µm, les valeurs de 1 à 5 µm étant les plus recommandées, par exemple environ 3 µm. Les particules de zéolite présentent avantageusement une surface spécifique mesurée par la méthode volumétrique de pénétration à l'azote selon la norme britannique BS 4359/1 (1984), d'au moins 200 m²/g, de préférence d'au moins 300 m²/g, plus particulièrement d'au moins 400 m²/g. La surface spécifique ne dépasse pas, en général, 1 000 m²/g, elle est de préférence au plus égale à 800 m²/g.

Des zéolites tout particulièrement avantageuses dans la composition selon l'invention sont celles décrites dans le brevet US 4795482.

Selon l'invention, la composition comprend une ou plusieures zéolites en une quantité totale de 0,05 à 2 parties en poids pour 100 parties en poids de polyoléfine. On obtient des résultats particulièrement satisfaisants avec des teneurs totales en zéolite d'au moins 0,08 partie en poids, les valeurs d'au moins 0,1 partie en poids étant les plus recommandées; la teneur totale en zéolite est avantageusement au maximum égale à 1 partie en poids, les teneurs totales au maximum égales à 0,5 % étant tout particulièrement préférées.

La composition selon l'invention comprend également un agent lubrifiant. Par "agent lubrifiant", on entend désigner un additif pour polyoléfines sérvant à réduire le frottement entre une première pièce fabriquée dans la polyoléfine et une autre pièce qui est en contact avec la première, en particulier à éviter une friction entre une capsule en polyoléfine et une bouteille afin de faciliter le dévissage de la capsule.

L'agent lubrifiant de la composition selon l'invention est choisi parmi les amides d'acides gras (telles que l'oléamide, le stéaramide et l'amide docosénoïque), et les esters de glycérol (tels que le monostérarate de glycérol). Les agents lubrifiants qui donnent de bons résultats sont les esters de glycérol, et les amides d'acides gras saturés ou insaturés contenant de 12 à 35 atomes de carbone, et leurs mélanges. On préfère les esters de glycérol et les amides d'acides gras insaturés contenant de 15 à 30 atomes de carbone, et en particulier le monostéarate de glycérol, le 13-docosénamide et leurs mélanges.

La composition selon l'invention comprend l'agent lubrifiant en une quantité totale d'au moins 0,1 partie en poids pour 100 parties en poids de polyoléfine, en particulier d'au moins 0,2 partie en poids, les quantités d'au moins 0,4 partie en poids étant les plus courantes; la quantité totale d'agent lubrifiant est au plus égale à 5 parties en poids, plus spécialement au plus égale à 2 parties en poids, les valeurs d'au maximum égales à 1 partie en poids pour 100 parties en poids de polyoléfine étant recommandées.

Par polyoléfine, on entend désigner les homopolymères d'oléfines et les copolymères d'oléfines avec un ou plusieurs comonomères, bien connus de l'homme du métier, et leurs mélanges. Les oléfines préférées sont l'éthylène et le propylène. Les comonomères préférés de l'éthylène sont le butène et l'hexène; les comonomères préférés du propylène sont l'éthylène et le butène.

De préférence, la polyoléfine est un polyéthylène choisi parmi les homopolymères et les copolymères de l'éthylène contenant un ou plusieurs comonomères. En général, la quantité de comonomère dans le copolymère est au moins égale à 0,01 % mol., en particulier au moins égale à 0,1 % mol., les quantités d'au moins 0,5 % mol. étant les plus avantageuses. La quantité de comonomère est habituellement au maximum égale à 10 % mol., plus précisément au maximum égale à 5 % mol., les quantités d'au plus 3 % mol. étant recommandées. On obtient des résultats particulièrement performants avec des quantités de comonomère de 0,4 à 1 % mol.

La polyoléfine préférée est choisie parmi les homopolymères et les copolymères de l'éthylène, appelés "polyéthylènes" ci-après. Ceux-ci présentent en général une masse volumique standard, mesurée selon la norme ISO 1183 (1987), d'au moins 930 kg/m³, le plus souvent d'au moins 935 kg/m³, les valeurs d'au moins 940 kg/m³ étant les plus avantageuses. La masse volumique standard est couramment au maximum égale à 965 kg/m³, plus spécialement au maximum égale à 960 kg/m³, les valeurs d'au plus 955 kg/m³ étant recommandées. Les masses volumiques standards de 950 à 955 kg/m³ sont préférées.

Le plus souvent, le polyéthylène est en outre caractérisé par un indice de fluidité, mesuré à 190 °C sous une charge de 5 kg selon la norme ISO 1133 (1991), d'au moins 0,05 g/10 min, en particulier d'au moins 0,1 g/10 min, les valeurs d'au moins 0,2 étant les plus courantes. L'indice de fluidité ne dépasse pas, en général, 10 g/10 min, de préférence pas 8 g/10 min, les valeurs d'au plus égales à 5 g/10 min étant recommandées. Les indices de fluidité de 1 à 3 g/10 min, par exemple environ 2 g/10 min, sont préférés.

Outre la polyoléfine, l'agent lubrifiant et la zéolite, la composition selon l'invention peut également contenirdes additifs usuels tels que des stabilisants (par exemple des anti-acides, des anti-oxydants et/ou des anti-UV), des colorants organiques ou minéraux (tels que par exemple l'oxyde de fer) ou des agents antistatiques. La teneur en chacun des additifs est en général inférieure à 10 parties en poids pour 100 parties en poids de polyoléfine.

La composition selon l'invention peut être obtenue selon tout moyen connu adéquat, par exemple en mélangeant la polyoléfine avec l'agent lubrifiant et la zéolite à température ambiante, suivi d'un mélange à une température supérieure à la température de fusion de la polyoléfine, par exemple dans un mélangeur mécanique ou dans une extrudeuse. Une méthode alternative consiste à introduire l'agent lubrifiant et/ou la zéolite dans la polyoléfine déjà fondue.

On peut éventuellement procéder en deux étapes successives, la première consistant à mélanger la polyoléfine, l'agent lubrifiant, la zéolite et éventuellement un ou plusieurs additifs à température ambiante, la deuxième étape consistant à poursuivre le mélange en fondu dans une extrudeuse. La température de la deuxième étape est généralement de 100 à 300 °C, en particulier de 120 à 250 °C, en particulier d'environ 130 à 210°C.

On peut aussi préparer, dans un premier temps, un mélange-maître comprenant une première fraction de la polyoléfine, l'agent lubrifiant, la zéolite et éventuellement d'autres additifs usuels, ce mélange-maître étant riche en agent lubrifiant et en zéolite. Ce mélange-maître est ensuite mélangé à la fraction restante de la polyoléfine, par exemple lors de la fabrication de granules de la composition.

La composition selon l'invention présente à la fois de bonnes propriétés de glissance, qui la rendent apte à être utilisée pour la fabrication de capsules pour bouteilles, et de bonnes propriétés organoleptiques, qui la rendent utilisable dans des applications alimentaires.

La composition selon l'invention est apte à être mise en oeuvre dans tous les procédés classiques de fabrication d'objets façonnés en polyoléfines et plus particulièrement dans les procédés d'extrusion, d'extrusion-soufflage, d'extrusion-thermoformage et d'injection. Elle convient bien pour la fabrication d'objets façonnés par injection, en particulier de capsules pour bouteilles.

Dès lors, la présente invention concerne également un procédé de fabrication d'objets façonnés à partir de la composition selon l'invention, en particulier un procédé de fabrication de capsules pour bouteilles par injection de cette composition.

Les exemples dont la description suit, servent à illustrer l'invention. L'exemple 3 est donné à titre de comparaison. La signification des symboles utilisés dans ces exemples, les unités exprimant les grandeurs mentionnées et les méthodes de mesure de ces grandeurs sont explicitées ci-dessous.
- MI =: indice de fluidité de la polyoléfine, exprimé en g/10 min, mesuré à 190 °C sous une charge de 2,16 kg selon la norme ASTM D 1238 (1986).
- MVS: = masse volumique standard de la polyoléfine, exprimée en kg/m³, mesurée selon la norme ISO 1183 (1987).
- Ol =: indice d'organolepticité, mesuré selon la méthode suivante : 8 g de plaquettes ou capsules injectées à partir de granules de la composition à base de polyoléfine (de dimension d'environ 1 cm³) sont stockés pendant 15 jours à 23 °C, puis sont mis en suspension dans 250 cm³ d'eau. La suspension ainsi obtenue est chauffée pendant 24 h à 60°C. Ensuite, 3 opérateurs différents goûtent l'eau de la suspension qui est refroidie à température ambiante et apprécient son goût. Ils donnent chacun une note de 1 à 4 en comparant à un échantillon d'eau ayant subi le même traitement en l'absence de plaquettes, la note de 1 correspondant au goût de cet échantillon d'eau. Une note élevée correspond à un mauvais goût. L'indice d'organolepticité (Ol) est la moyenne des notes des 3 opérateurs.

### Exemple 1 (conforme à l'invention)

Dans cet exemple, on a fabriqué des granules d'une composition conforme à l'invention dont on a ensuite testé les propriétés organoleptiques.
Dans une extrudeuse, on a mélangé (à 190 °C) et granulé une composition comprenant :
- 100 parties en poids de polyéthylène (contenant environ 3 % mol de butène) présentant un MI de 1,8 g/10 min et une MVS de 952 kg/m³;
- 0,05 partie en poids d'agent anti-acide (stéarate de calcium);
- 0,025 partie en poids d'agent anti-oxydant [stéaryl bèta-(3,5-di-t-butyl-4-hydroxyphényl)-prop ionate];
- 0,04 partie en poids d'agent anti-oxydant [bis (2,4-di-t-butyl)pentaérythritol diphosphite];
- 0,25 partie en poids d'agent lubrifiant (monostéarate de glycérol);
- 0,2 partie en poids d'agent lubrifiant (amide docosénoïque)
- 0,2 partie en poids d'agent anti-UV (un polyester d'acide succinique et de N-bètahydroxyéthyl-2,2,6,6-tétraméthyl-4-hydroxypipéridine)
- 0,1 partie en poids de zéolite ABSCENTS® 3000 produite par la société UOP (présentant un rapport molaire Si/Al supérieur à 35, un diamètre moyen des pores supérieur à 5,5 Å et une capacité d'adsorption d'eau inférieure à 10 % en poids).

Lors de la granulation, aucune odeur ne s'est dégagée de l'extrudeuse.

Les granules de la composition ainsi obtenues présentaient un Ol de 2,5.

### Exemple 2 (conforme à l'invention)

On a répété les opérations de l'exemple 1 en mettant en oeuvre une quantité de zéolite ABSCENTS de 0,2 partie en poids au lieu de 0,1 partie en poids. Lors de la granulation aucune odeur ne s'est dégagée de l'extrudeuse. Les granules de la composition ainsi obtenues présentaient un Ol de 1,3.

### Exemple 3 (à titre de comparaison)

Dans cet exemple, on a fabriqué des granules d'une composition comprenant les mêmes constituants que la composition des exemples 1 et 2 à l'exception de la zéolite.

On a répété les opérations de l'exemple 1 en omettant l'introduction de la zéolite dans la composition. Lors de la granulation, une odeur s'est dégagée de l'extrudeuse. La composition (sans zéolite) ainsi obtenue présentait un Ol de 3,5.

Une comparaison du résultat de l'exemple 3 avec celui des exemples 1 et 2 fait apparaître le progrès apporté par l'invention pour ce qui concerne les propriétés organoleptiques.

## Revendications

1. Composition à base de polyoléfine comprenant, pour 100 parties en poids de polyoléfine, de 0,1 à 5 parties en poids d'agent lubrifiant choisi parmi les esters de glycérol, les amides d'acides gras saturés ou insaturés contenant de 12 à 35 atomes de carbone et leurs mélanges, et de 0,05 à 2 parties en poids de zéolite, cette zéolite étant un aluminosilicate cristallin présentant une capacité d'adsorption d'eau, à 25°C et à une pression partielle de vapeur d'eau de 613.3 Pa (4.6 torr), ne dépassant pas 10 % de son poids, et présentant un rapport molaire Si/Al, dans le réseau cristallin, au moins égal à 35.

2. Composition selon la revendication 1, dans laquelle la zéolite présente un diamètre moyen des pores d'au moins 5,5 Å et d'au plus 15 Å.

3. Composition selon l'une quelconque des revendications 1 ou 2, dans laquelle la zéolite répond à la formule générale xM_{2/n}O.Al₂O₃.ySiO₂.zH₂O, où M représente un élément des groupes IA et IIA du tableau périodique, n représente la valence de M, et x, y et z représentent des nombres supérieurs à 0, y étant au moins égal à 70 et z étant tel que la teneur en eau de la zéolite ne dépasse pas 10 % de son poids.

4. Composition selon l'une quelconque des revendications 1 à 3, dans laquelle l'agent lubrifiant est choisi parmi les esters de glycérol et les amides d'acides gras insaturés contenant de 15 à 30 atomes de carbone.

5. Composition selon la revendication 4, dans laquelle l'agent lubrifiant est choisi parmi le monostéarate de glycérol, l'amide docosénoïque et leurs mélanges.

6. Composition selon l'une quelconque des revendications 1 à 5, dans laquelle la polyoléfine est un polyéthylène choisi parmi les homopolymères et les copolymères de l'éthylène contenant un ou plusieurs comonomères.

7. Composition selon la revendication 6, dans laquelle le polyéthylène présente une masse volumique standard de 930 à 965 kg/m³ et un indice de fluidité de 0,05 à 10 g/10 min.

8. Procédé de fabrication d'objets façonnés à partir d'une composition à base de polyoléfine conforme à l'une quelconque des revendications 1 à 7.

9. Procédé selon la revendication 8 appliqué à la fabrication de capsules pour bouteilles par injection.

## Claims

1. A polyolefin-based composition comprising, per 100 parts by weight of polyolefin, from 0.1 to 5 parts by weight of lubricating agent chosen from glycerol esters, amides of saturated or unsaturated fatty acids comprising from 12 to 35 carbon atoms, and their mixtures, and from 0.05 to 2 parts by weight of zeolite, this zeolite being a crystalline aluminosilicate exhibiting a water adsorption capacity, at 25°C and at a water vapour partial pressure of 613.3 Pa (4.6 torr), not exceeding 10% of its weight and exhibiting an Si/Al molar ratio, in the crystal lattice, at least equal to 35.

2. A composition according to claim 1, in which the zeolite exhibits a mean diameter of the pores of at least 5.5 Å and of at most 15 Å.

3. A composition according to either one of claims 1 and 2, in which the zeolite corresponds to the general formula xM_{2/n}O·Al₂O₃·ySiO₂·zH₂O, where M represents an element from Groups IA and IIA of the Periodic Table, n represents the valency of M, and x, y, and z represent numbers greater than 0, y being at least equal to 70 and z being such that the water content of the zeolite does not exceed 10% of its weight.

4. A composition according to any one of claims 1 to 3, in which the lubricating agent is chosen from glycerol esters and amides of unsaturated fatty acids comprising from 15 to 30 carbon atoms.

5. A composition according to claim 4, in which the lubricating agent is chosen from glyceryl monostearate, docosenamide, and their mixtures.

6. A composition according to any one of claims 1 to 5, in which the polyolefin is a polyethylene chosen from homopolymers and copolymers of ethylene comprising one or more comonomers.

7. A composition according to claim 6, in which the polyethylene exhibits a standard density of 930 to 965 kg/m³ and a melt flow index of 0.05 to 10 g/10 min.

8. A process for the manufacture of shaped items from a polyolefin-based composition in accordance with any one of claims 1 to 7.

9. A process according to claim 8, applied to the manufacture of caps for bottles by injection moulding.

## Patentansprüche

1. Polyolefin-Zusammensetzung, die auf 100 Gewichtsteile Polyolefin 0,1 bis 5 Gewichtsteile Gleitmittel, das unter den Glycerinestern, den gesättigten oder ungesättigten Fettsäureamiden mit 12 bis 35 Kohlenstoffatomen und deren Gemischen ausgewählt ist, und 0,05 bis 2 Gewichtsteile Zeolith umfaßt, wobei dieser Zeolith ein kristallines Aluminosilikat ist, das bei 25°C und bei einem Wasserdampfpartialdruck von 613,3 Pa (4,6 Torr) eine Wasseraufnahmekapazität aufweist, die 10 % seines Gewichts nicht übersteigt, und das im Kristallgitter ein Molverhältnis Si/Al von wenigstens gleich 35 aufweist.

2. Zusammensetzung gemäß Anspruch 1, bei der der Zeolith einen mittleren Porendurchmesser von wenigstens 5,5 Å und von höchstens 15 Å aufweist.

3. Zusammensetzung gemäß einem der Ansprüche 1 oder 2, bei der der Zeolith der allgemeinen Formel xM_{2/n}O·Al₂O₃·ySiO₂·zH₂O entspricht, worin M ein Element der Gruppen IA und llA des Periodensystems darstellt, n die Wertigkeit von M darstellt und x, y und z Zahlen größer als 0 darstellen, wobei y wenigstens gleich 70 ist und z so ist, daß der Gehalt an Wasser des Zeolithen 10 % seines Gewichts nicht übersteigt.

4. Zusammensetzung gemäß einem der Ansprüche 1 bis 3, bei der das Gleitmittel unter den Glycerinestern und den ungesättigten Fettsäureamiden mit 15 bis 30 Kohlenstoffatomen ausgewählt ist.

5. Zusammensetzung gemäß Anspruch 4, bei der das Gleitmittel unter Glycerinmonostearat, Docosensäureamid und deren Gemischen ausgewählt ist.

6. Zusammensetzung gemäß einem der Ansprüche 1 bis 5, bei der das Polyolefin ein Polyethylen ist, das unter den Ethylen-Homopolymeren und den Ethylen-Copolymeren mit einem oder mehreren Comonomeren ausgewählt ist.

7. Zusammensetzung gemäß Anspruch 6, bei der das Polyethylen eine Standarddichte von 930 bis 965 kg/m³ und einen Fließindex von 0,05 bis 10 g/10 min aufweist.

8. Verfahren zur Herstellung von Formgegenständen aus einer Polyolefin-Zusammensetzung gemäß einem der Ansprüche 1 bis 7.

9. Verfahren gemäß Anspruch 8, angewendet auf die Herstellung von Flaschenkapseln durch Einspritzen.
